# EUROPEAN PATENT SPECIFICATION

(11) **EP 0 696 256 B1**
(45) Date of publication and mention of the grant of the patent: **17.09.1997**
(21) Application number: 93913468.0
(22) Date of filing: 24.05.1993
(51) Int. Cl.: C01B 3/56

(54) **PROCESS FOR THE REMOVAL OF GASEOUS IMPURITIES FROM A STREAM OF HYDROGEN**
VERFAHREN ZUR ENTFERNUNG VON GASFÖRMIGEN VERUNREINIGUNGEN AUS EINEM WASSERSTOFFSTROM
PROCEDE D'ELIMINATION D'IMPURETES GAZEUSES D'UN COURANT D'HYDROGENE

(30) Priority: 29.04.1993 IT MI930850
(43) Date of publication of application: 14.02.1996
(73) Proprietor: SAES GETTERS S.P.A., I-20151 Milano (IT)
(72) Inventor: SUCCI, Marco, I-20131 Milano (IT); D'ARCY, Lorimer, Sal Luis Obispo, CA 93401 (US)
(74) Representative: Adorno, Silvano
(86) International application number: PCT/IT93/00052
(87) International publication number: WO 94/25394

(56) References cited:
- EP-A- 0 240 270
- GB-A- 2 177 079
- '13th Symposium on Fusion Technology' September 1984 , VARESE cited in the application see page 421 - page 426
- JOURNAL OF THE LESS COMMON METALS 1991 , NETHERLANDS pages 1157 - 1167 H.ALBRECHT ET AL. 'Application of SAES and HWT gas purifiers for the removal of impurities from helium-hydrogen gas mixtures' cited in the application

## Description

The invention relates to an improved process for the removal of gaseous impurities from a stream of hydrogen, without residual traces of methane and without causing any formation of new methane, particularly suitable for the long lasting manufacture of purified hydrogen containing less than 50 and preferably 20 ppb of methane, namely 20 parts per 10⁹ parts (by volume).

The semiconductor industry is developing integrated circuits with ever more increasing line densities and it is thus required that the materials used in the involved manufacturing processes be of ever increasing purity. As hydrogen is one of the gases used in these processes it is therefore necessary to ensure that its impuritycontent be kept as low as possible. The main gaseous impurities in commercial hydrogen are moisture (water vapour), oxygen, carbon monoxide (CO), carbon dioxide (CO₂) and mixtures thereof (COₓ), as well as nitrogen and methane, these last (N₂ and especially CH₄) being very hardly removable.

One method for the purification of hydrogen, since a long time, was the selective diffusion of hydrogen through palladium or palladium alloys. The rate of diffusion, however, increased with the pressure drop between the opposite sides of a Pd barrier; moreover the operating temperature, for an economical throughput of purified hydrogen on Pd, was very high. In addition, as the hydrogen impurities are blocked by the Pd barrier, a removal device or expedient has to be provided for; US Patent N° 3,368,329 describes one of such apparatuses and another form of hydrogen purification by means of diffusion membranes is described in US Patent N° 3,534,531.

Such diffusion barriers however, while very efficient, show several drawbacks. Should the barrier be sufficiently thin as to ensure a high throughput of purified hydrogen, it would suffer from mechanical failure, with consequent undesirable leakage of impure hydrogen into the purified gas. The drawback is even more heavy because of the high pressure drop between the two sides of the barrier. If the barrier thickness gets increased, as to avoid mechanical failure, then excessively high temperatures have to be used for ensuring a high throughput of purified gas. The use of high temperatures in the presence of hydrogen is also very dangerous, due to the potential existence of explosive hydrogen-oxygen (or air) mixtures, whenever excessively high temperatures are encountered, and an increased barrier thickness also implies the use of greater amounts of expensive palladium.

The use of other sorption materials in the purification of a wide variety of gases is also well known in the art. See for instance United Kingdom Patent Application N° 2,177,079 and N° 2,177,080 disclosing a two-step purification of argon and nitrogen respectively.

The article "Removal of simple hydrocarbons from a rare gas by a 70% Zr - 25% V - 5% Fe getter" by M.A. George, J.H. Kiefer and J.P. Hessler published in Gas Separation and Purification, 1989, Vol. 3, pp. 50-55 describes a two-zone purifier which effectively removes methane from argon to less than 20 ppb. However this article is silent as to the purification of hydrogen.

An article with the title "Removal of nitrogen and methane from hydrogen by metal getters" by H. Heimbach, H.R. Ihle and C.H. Wu, published in the Proceedings of the 13th Symposium on Fusion Technology (SOFT), Varese, September 24-28, 1984, pp. 421-426, was talking about the removal of methane from hydrogen but found that a measurable depletion of CH₄ required excessively high temperature and that an "appreciable depletion of CH₄ occurs at about 600°C" when using Zr₃Al₂ or Zr(V_{0.83}Fe_{0.17})₂ as the getter material for the removal of impurities. But there is no indication of the problems which arise when there is the simultaneous presence of carbon monoxide(and/or carbon dioxide) and hydrogen.

Another article "Application of SAES and HWT gas purifiers for the removal of impurities from helium-hydrogen gas mixtures" by H. Albrecht, U. Kuhnes and W. Asel published in the Journal of Less-Common Metals, Vol. 172-174 (1991) pp. 1157-1167 describes the effect of the simultaneous removal of various impurities from tritium. At page 1165 it states "For CH₄ (impurity) the getter temperature of 200°C was obviously too low to cause any measurable sorption effect. At 300°C, however a surprising effect was found; an increase in concentration rather than the expected decrease. This can be explained by the formation of additional methane caused by the interaction of carbon monoxide and hydrogen during the passage through the getter". This effect is shown in fig. 7 of the publication. It goes on to propose the use of two getter beds. The first bed is operated in the range 200-250°C to "reduce" the concentration of CO and H₂ and the second at a temperature of at least 400°C to remove effectively all the CH₄ and N₂. However when hydrogen (and not tritium) has to be purified, hydrogen should not obviously be "reduced" or "removed". As an alternative, Albrecht was suggesting to provide separation of hydrogen isotopes in molecular form by using a Pd-Ag diffused in a preliminar purification step. Such an expedient however would reintroduce all the disadvantages of palladium diffusors previously criticized and does not add any clarification to the problem of purifying hydrogen (and not tritium).

The co-pending European Application EP-A-696257 discloses a process for the purification of a flow of hydrogen consisting in contacting said flow first with a bed containing nickel compounds and comprising at least 1% of elemental nickel, possibly carried on a porous support; the flow of pre-purified hydrogen leaving said nickel bed is then contacted at a temperature comprised between 400 and 600°C with a bed of a non-evaporable getter material, chosen among Ti-Ni alloys, Zr-Ni alloys and Ti-V-Mn alloys.

It is therefore one object of the present invention to provide an improved process for the purification of hydrogen free from one or more of the drawbacks of the prior art.

It is another object of the present invention to provide an improved process for the purification of hydrogen without requiring diffusion through palladium or Pd alloys.

It is still another object of the present invention to provide an improved process for the purification of hydrogen which is free from high pressure drops.

It is a further object of the present invention to provide an improved process for a long lasting manufacture of hydrogen free from any presence of methane, without any formation of new methane.

These and further advantages of the present invention will become clear to one skilled in the art by reference to the following disclosure and drawings.

In its broadest aspect the invention relates to an improved process for the removal of gaseous impurities from a stream of hydrogen, containing a first class of more easily removable impurities, like for instance COₓ, and a second class of more hardly removable impurities, mainly consisting of nitrogen and/or methane, essentially consisting of the following steps:
A. Said stream is first brought into contact, at 5-50°C, with one or more beds of a particulate material containing nickel and/or nickel compounds and optionally also a carrier, wherein at least 1% b.w. (preferably 5%) of the overall amount of nickel is present in the reduced (elemental) form, until said more easily removable impurities are removed in an essentially complete way;
B. The stream coming from step A, essentially free from said more easily removable impurities, but still containing said more hardly removable impurities, is brought into contact at a higher temperature with one or more beds of a non-evaporable getter material selected from:
   i) the alloys of zirconium, vanadium and iron;
   ii) the alloys of zirconium, manganese and iron, wherein up to 0.8 atoms of zirconium may be replaced by titanium.

Said hydrogen stream has suitably a pressure from 1 to 20 bar and the temperature of step (B) is suitably from 200 to 600°C.

Should the hydrogen feed stream be free from methane, the temperature of step (B) is advantageously comprised between 300 and 350°. Should on the contrary the hydrogen feed stream contain considerably amounts of the impurity "methane" said temperature is preferably in the 400-600°C range.

The (mass) space velocity of the hydrogen stream is generally from 0.5 to 50 normal cm³/minute per gram of getter material and the amount of undesired methane is generally up to 5 ppm (5000 ppb).

The elemental nickel and the nickel compounds (e.g. oxide) used in first step (A) of the two-step process according to the invention are suitably supported on a carrier preferably consisting of a silicalite, a titanium- silicalite, a xerogel (see EP-A-537851) or a silica having an effective surface area equal to or higher than 100 m²/g (preferably 100-200 m²/g), as described in U.S. patent 4,713,224, and the nickel containing bed may be followed or (preferably) preceded by a second sorbing bed, essentially consisting of a natural or synthetic molecular sieve, like for instance natural or synthetic zeolites, silicalites or titanium-silicalites.

A getter material for the process according to the invention is suitably a Zr-V-Fe getter alloy whose composition, when plotted on a ternary diagram lies within a polygon having as its corners the points defined by (% b.w.):
(a) 75% Zr - 20% V - 5% Fe
(b) 45% Zr - 20% V - 35% Fe
(c) 45% Zr - 50% V - 5% Fe.

A preferred alloy is one in which the getter material is a non-evaporable ternary Zr-V-Fe gettering alloy whose composition, when plotted on a ternary diagram lies within a polygon having as its corners the points defined by (% b.w.):
(d) 70% Zr - 25% V - 5% Fe
(e) 70% Zr 24% V - 6$ Fe
(f) 66% Zr - 24% V - 10% Fe
(g) 47% Zr - 43% V - 10% Fe
(h) 47% Zr - 45% V - 8% Fe
(i) 50% Zr - 45% V - 5% Fe.

Even more preferably it is an alloy containing 70% Zr - 24.6% V - 5.4% Fe by weight. As to all the alloys above see U.S.P. 4,312,669, in the name of the Applicant.

Small amounts of other metals can be used without substantially altering its purification characteristics. For instance iron or vanadium may be partially replaced by nickel, cobalt or manganese and vanadium may be partially replaced by niobium. It may be advantageous to replace some of the zirconium with titanium without substantially altering the main sorption ability of the basic ternary alloy. One or more substitutions may take place at the same time.

Alternatively one can use Zr-Mn-Fe alloys, wherein up to 0.8 atoms of zirconium may be replaced by titanium.

The getter material may be used in the form of a loose powder showing an average particle size between 1 and 500 micrometer, preferably between 1 and 250 micrometer and even better between 1 and 128 micrometer, but said powder may optionally be shaped, before use, in the form of formed bodies (pellets, tablets, rings, saddles and so on). The shaping may be carried out by compression or by sintering; in its turn said sintering may be carried out by simple heating or by exploiting both a heating and the presence of a second powder, as described e.g. in GB Patent Publication N° 2,077,487, in order to reach a satisfactory level of porosity. The average size of said bodies is generally equal to a few millimeter (0.5-5 mm).

The surface of the device containing said impurity adsorbing alloys, in contact with said stream of hydrogen, has to be very thoroughly polished in a uniform smooth way, in order to minimize contamination. The desired degree of smoothness of said surface may be expressed in terms of roughness of the inner wall surface, to be brought into contact with the hydrogen gas; said roughness in its turn, according to preferred embodiment of the invention, has to be equal to or lower than 0.50 and preferably 0.25 micrometer, in terms of centerline average height (Rₐ). Although such values are not critical, they are recommended as a reliable safe condition.

Fig. 1 is a partially cut-away front view of a purifier according to the present invention, for the removal of impurities from an impurity-containing hydrogen stream.

Fig. 2 is a graph showing on the ordinate the amount of methane produced by different getter materials, in pure hydrogen, as a function of time on the abscissa.

Fig. 3 is a graph showing on the ordinate the amount of methane produced by a 70% Zr - 24.6% V - 5.4% Fe alloy at different temperatures as a function of gas flow rate in liter per minute on the abscissa.

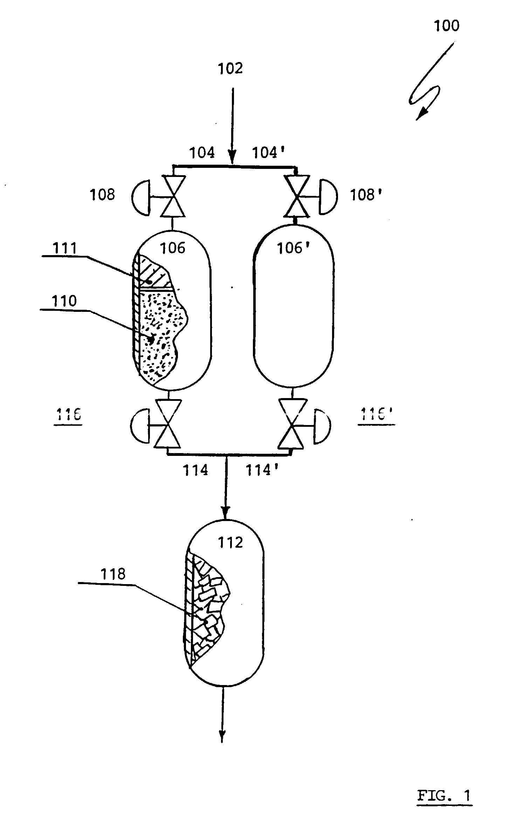

Referring now to the drawing of Fig. 1, there is shown a purifier 100 for the removal of impurities from an impurity-containing hydrogen stream, having a gas inlet 102 in fluid communication, through pipings 104, 104', with preliminar purification chambers 106, 106'. Valves 108, 108' can be alternately opened or closed, as to allow the passage of the impurity-containing gas through the first or the second of the preliminar purification chambers 106, 106', containing a bed of particulate material 110, based on supported nickel, whereby said bed removes, at a relatively low temperature, the more easily removable impurities (COₓ and so on). Chambers 106, 106' may in addition contain a natural or synthetic molecular sieve 111 to better promote the removal of carbon dioxide, or alternatively a separate molecular sieve may be provided for. Said chambers 106, 106' can also remove moisture down to trace levels, but do not remove nitrogen and methane.

It is thus possible to obtain a partially purified hydrogen containing only the second class of impurities, essentially consisting of nitrogen and methane. The partially purified gas leaves therefore preliminar purification chambers 106, 106' entering, a final purification chamber 112, kept at a much higher temperature, with which chambers 106, 106' are in fluid communication, by means of pipings 114, 114'. Valves 116, 116' control the flow of the partially purified gas from either of the first preliminar purification chambers 106, 106', which allow the regeneration of nickel in one chamber whilst the other is working. In said final purification chamber 112 the partially purified hydrogen comes into contact with a bed of non-evaporable getter material 118.

The invention may be better understood by reference to the following examples wherein all parts and percentages are by volume unless otherwise indicated; such examples are merely supplied for illustrating purposes and do not limit in any case the spirit and the scope of the invention.

### EXAMPLE 1

A stream of hydrogen, containing 5 ppm by volume of methane (5000 ppb) as well as traces of nitrogen and COₓ, was allowed to flow, at a flow rate of 100 normal cm³/minute, at a pressure of 4 bar and at a room temperature (lower than 40°C), through a first preliminar chamber (106) containing two beds of sorbing materials; upstream there was a bed (111) consisting of a molecular sieve and downstream there was another bed (110) containing approximately 20 g of a material containing 58% b.w. of nickel, mainly in the form of nickel oxide supported on a silica carrier, traded by the Engelhard Company as "Ni 0104T", having a surface area slightly higher than 100 m²/g. At least 5% b.w. of said nickel, was in the reduced (elemental) state.

At the outlet of such preliminar chamber it was no more possible to retrieve any trace of COₓ. The gas stream was then allowed to flow, through a second (finishing) chamber, loaded with 40 g of a non-evaporable Zr-V-Fe getter alloy, (the Zr-V-Fe alloy of example 2) in the form of pellets having a diameter of 3 mm and a height of 4 mm. The temperature of said getter alloy was kept at 550°C throughout the test.

The level of the residual CH₄ concentration was measured, at the outlet of said second chamber, by means of a VALCO gas-chromatograph, working with a metastable helium ionization detector having a sensitivity limit of 5 ppb for methane. At the beginning, the fresh getter alloy did completely adsorb all the methane and no trace of residual methane could be detected at the outlet of said second chamber; then the getter alloy began to be appreciably saturated and the test was arrested when the concentration of residual methane reached the level of 50 ppb. From the elapsed time, it was calculated that an overall amount of methane of 0.20 torr x liter/g had been adsorbed.

### EXAMPLES 2-8

The following examples are supplied in order to show the criticality of the use of nickel in the preliminar (cold) purification chamber.

A chamber was filled with 50 g of the material to be tested for the removal of carbon monoxide and carbon dioxide (COₓ) from hydrogen, at a pressure slightly higher than 1 bar (3 bar) and for the (undesired) coproduction of methane. Before each test all materials were activated at 400°C in a stream of pure hydrogen, at a flow rate of 200 normal cm³/minute for 4 hours, but for Examples 7 and 8, where temperature of 350°C and 200°C respectively, were used.

The materials were then cooled to room temperature and then a stream of hydrogen, containing 5 ppm by volume (5000 ppb) of carbon monoxide, and less than 5 ppb of methane, was allowed to flow, at room temperature and at a rate of 500 normal cm³ per minute, into said chamber and the impurity levels of carbon monoxide and methane were measured at the outlet as in Example 1 (chromatograph sensitivity = 30 ppb of CO).

The results are reported in Table I.

**TABLE 1**

| EXAMPLE | MATERIAL | FORM | CARBON MONOXIDE REMOVAL | METHANE FORMATION |
|---|---|---|---|---|
| 2 | 70%Zr | Pill | 100% | 25% |
| | 24.6%V | 3mm x 4mm | | |
| | 5.4%Fe | | | |
| 3 | Zr₂Fe | Pill | 100% | 34-40% |
| | | 3mm x 4mm | | |
| 4 | 84%Zr-16%Al | Powder | 100% | 50% |
| | | <200µm | | |
| 5 | ZrMnFe | Pill | 100% | 2-7% |
| | | 6mm x 4mm | | |
| 6 | Zr_{0.2}Ti_{0.8} | Powder | 100% | 1-2% |
| | Mn_{0.5}Fe_{1.5} | <200µm | | |
| 7 | BaCu | Granules | 0% | 0% |
| | | <1.4mm | | |
| 8 | Nickel | Pill | 100% | 0% |
| | | 3mm x 4mm | | |

The formation of methane is expressed as a volume percentage of the removed carbon monoxide.

As it can be inferred from Table I the only material which removed 100% of carbon monoxide from hydrogen with no formation at all of methane is the nickel of Example 8.

### EXAMPLE 9

This example shows the (undesired) production of methane on a 70% Zr - 24.6% V - 5.4% Fe getter material when subject to the sorption of pure hydrogen, at a high temperature and at a pressure slightly greater than 1 bar (3 bar), not accompanied by sorption of carbon monoxide and not preceded by the cold preliminar passage through a Ni bed.

A chamber (112) was filled with 50g of the getter material to be tested for the production of methane when subject to the sorption of pure hydrogen. A stream of hydrogen, with a maximum methane content of less than 5 ppb and a maximum content of carbon dioxide of less than 5 ppb, was allowed to flow at a rate of 0.1 normal liter/minute into said chamber. The sample of getter material was heated to 400°C and the methane produced by the getter was measured at the outlet as in examples 2-8. The results are reported in Fig. 2 as line 1.

As it could be deduced from Fig. 2, the alloys of example 10 and 11 are likely to contain, with respect to the alloy of example 9, a major amount of C containing compounds, coming in part from the atmosphere during manufacture, storage or transport (in fact practically no fresh methane nor fresh COₓ had been voluntarily introduced into the feed stream).

This would prove that said alloys of examples 10 and 11 are more reactive to said C containing compounds and one is therefore authorized to hypothesize that the alloys of examples 10 and 11 could be more advantageously used when the hydrogen to be purified contains considerable amounts of the hardly removable methane (whereas the alloy of example 9 could be more advantageously used when the impure hydrogen does not essentially contain the methane impurity).

### EXAMPLE 10

Example 9 was repeated, except that the getter material was the ZrMnFe alloy of example 5. The results are reported on the graph of Fig. 2 as line 2.

### EXAMPLE 11

Example 9 was repeated, except that the getter material was Zr_{0.2}Ti_{0.8}Mn_{0.5}Fe_{1.5}. The results are reported on the graph of Fig. 2 as line 3.

### EXAMPLE 12

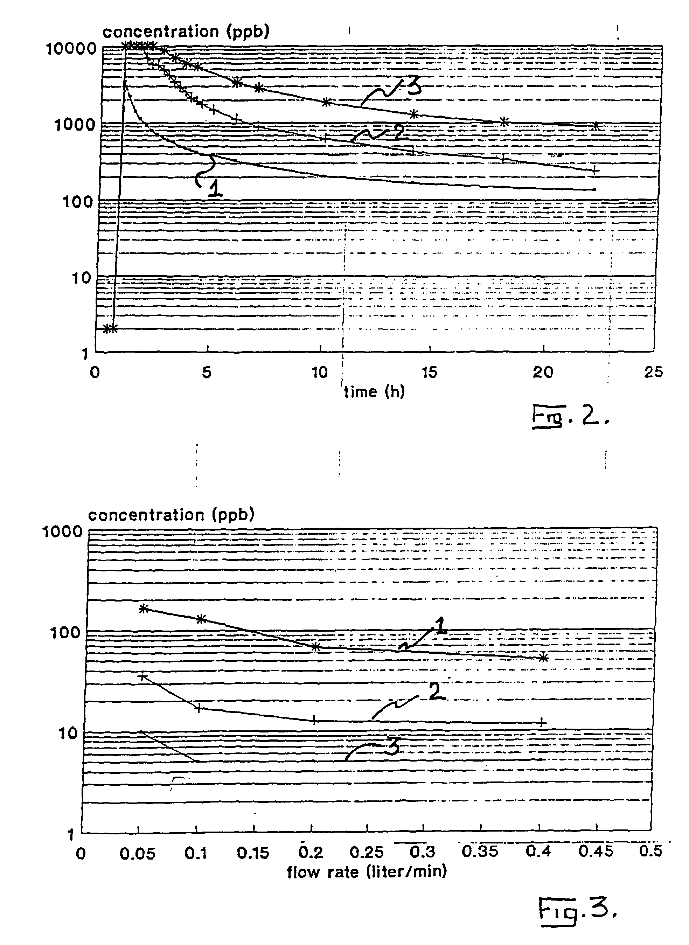

Example 9 was repeated, except that the test gas was made to flow at different rates. The results are reported on the graph of Fig. 3 as line 1.

### EXAMPLE 13 (Temperature test)

Example 12 was repeated except that the temperature was lowered to 350°C. The results are reported in Fig. 3 as line 2.

### EXAMPLE 14

Example 12 was repeated except that the temperature was lowered to 300°C. The results are reported in Fig. 3 as line 3.

### EXAMPLE 15 (Nitrogen test)

A chamber (112) was filled with 50g of an alloy containing 70% Zr - 24.6% V - 5.4% Fe, and activated at 400°C for 4 hours in a stream of 200 normal cm³/minute of pure hydrogen. The temperature was lowered to 350°C and a sample of hydrogen, containing 50 ppm of nitrogen, was allowed to flow at a rate of 200 normal cm³/minute. The test was continued until at least 8 litre x torr/g of nitrogen had been sorbed. No nitrogen was detected at the outlet as measured on an ANTEK gaschromatograph provided with a metastable helium ionization detector with a nitrogen sensitivity of 30 ppb.

### EXAMPLE 16

Example 15 was repeated except that the temperature was lowered to 300°C. The test was continued until at lest 8 litrextorr/g of nitrogen had been sorbed. No nitrogen was detected at the outlet as measured on the gaschromatograph of example 15.

Fig. 2 shows that in the presence of a Zr-V-Fe alloy methane is produced to a very low extent and Fig. 3 shows that between 300°C and 350°C the produced methane is less than 20 ppb. Moreover, at these temperatures (300-350°C) examples 15 and 16 show that the nitrogen sorption capacity is still very high.

## Claims

1. A process for the removal of gaseous impurities from a stream of hydrogen, containing a first class of impurities, easier to be removed, like for instance COₓ, and a second class of harder to remove impurities, mainly consisting of nitrogen and methane, essentially consisting of the following steps:
A. Said stream is first brought into contact, at 5-50°C, with one or more beds of a particulate material containing nickel and/or nickel compounds, and optionally also a carrier, wherein at least 1% b.w. (preferably 5%) of the overall amount of nickel is present in reduced (elemental) form, until said easier to remove impurities are removed in an essentially complete way;
B. The stream coming from step A, essentially free from said easier to remove impurities, but still containing said harder to remove nitrogen and methane, is brought into contact at a higher temperature with one or more beds of a non-evaporable getter material selected from:
i) the alloys of zirconium, vanadium and iron;
ii) the alloys of zirconium, manganese and iron, wherein up to 0.8 atoms of zirconium may be replaced by titanium.

2. The process of claim 1, wherein the pressure of said stream is from 1 to 20 bar and wherein the temperature of step B is from 200 to 600°C.

3. The process of claim 2, wherein the hydrogen feed stream is essentially free from methane and wherein the temperature of step (B) is from 300 to 350°C.

4. The process of claim 2, wherein the hydrogen feed stream contains also methane, as an impurity, and wherein the temperature of step (B) is from 400 to 600°C.

5. The process of claim 1, wherein said nickel and/or nickel compounds are supported on a carrier essentially consisting of a silicalite, a titanium-silicalite, a xerogel or a silica having an effective surface area equal to or higher than 100² m²/g (preferably 100 - 200 m²/g).

6. The process of claim 1, wherein the nickel containing bed is followed or (preferably) preceded by a second sorption bed, consisting of one or more natural or synthetic molecular sieves and in particular of natural or synthetic zeolites, silicalites or titanium-silicalites.

7. The process of claim 1, wherein said getter material is contained in a housing with uniformly and smoothly polished inner walls, the roughness of said inner walls, expressed in terms of centerline average height (Rₐ), being equal to or lower than 0.50 and preferably 0.25 micrometer.

8. The process of claim 4, wherein the hydrogen space velocity is from 0.5 to 50 normal cm³/minute per gram of getter material and wherein the amount of the hardly removable methane is up to 5 ppm.

9. The process of claim 1, wherein said getter material is in the form of a loose powder having an average particle size from 1 to 500 and preferably from 1 to 250 micrometer.

10. The process according to claim 1, wherein said getter material is in the form of a shaped body, in particular pellets, having preferably an average size from 0.5 to 5 mm.

11. The process of Claim 1, wherein the getter material is a non-evaporable ternary getter alloy, whose composition in weight percent, when plotted on a ternary diagram, lies within a polygon having as its corners the points defined by:
(a) 75% Zr - 20% V - 5% Fe
(b) 45% Zr - 20% V - 35% Fe
(c) 45% Zr - 50% V - 5% Fe.

12. The process of claim 11, wherein the getter material is a non-evaporable ternary getter alloy, whose composition in weight percent, when plotted on a ternary diagram, lies within a polygon having as its corners the points defined by:
(d) 70% Zr - 25% V - 5% Fe
(e) 70% Zr 24% V - 6$ Fe
(f) 66% Zr - 24% V - 10% Fe
(g) 47% Zr - 43% V - 10% Fe
(h) 47% Zr - 45% V - 8% Fe
(i) 50% Zr - 45% V - 5% Fe.

13. The process of claim 1, wherein said Zr-V-Fe alloys may be modified as follows:
i) iron or vanadium may be partially replaced by nickel, cobalt or manganese;
ii) vanadium may be partially replaced by niobium;
iii) some of the zirconium may be replaced by titanium.

14. An apparatus for the removal of gaseous impurities from a stream of hydrogen, containing a first class of more easily removable impurities, like for instance CO_{x,} and a second class of more hardly removable impurities, mainly consisting of nitrogen and methane, comprising:
A) a gas inlet 102 in fluid communication, through pipings 104, 104', with preliminar purification chambers 106, 106', as well as valves 108, 108', which can be alternately opened or closed, to allow passage of the impurity-containing hydrogen through the first or the second of the preliminar purification chambers 106, 106', containing a bed of particulate material 110, based on supported nickel, and optionally containing also a second bed of a natural or synthetic molecular sieve material (111);
B) a final purification chamber 112, with which preliminar chambers 106, 106' are in fluid communication, by means of pipings 114, 114', and valves 116, 116', which control the flow of the partially purified hydrogen from either of the preliminar purification chambers 106, 106', which allows the regeneration of nickel in one chamber whilst the other is working, wherein said final purification chamber 112 contains a bed of non-evaporable getter material 118 selected from:
A) the alloys of zirconium, vanadium and iron;
B) the alloys of zirconium, manganese and iron, wherein up to 0.8 atoms of zirconium may be replaced by titanium.

## Patentansprüche

1. Verfahren zur Entfernung von gasförmigen Verunreinigungen aus einem Wasserstoffstrom, der eine erste Klasse von leichter zu entfernenden Verunreinigungen wie COₓ, sowie eine zweite Klasse von schwerer zu entfernenden Verunreinigungen, hauptsächlich bestehend aus Stickstoff und Methan enthält, das im wesentlichen aus den folgenden Schritten besteht:
A. Der Strom wird zunächst bei 5 bis 50 °C mit einer oder mehreren Schichten aus einem bestimmten Material in Kontakt gebracht, das Nickel und/oder Nickelverbindungen und ggf. auch einen Träger enthält, worin mindestens 1 Gew.-% (bevorzugt 5 Gew.-%) der Gesamtmenge an Nickel in reduzierter (elementarer) Form vorliegt, bis die leichter zu entfernenden Verunreinigungen im wesentlichen vollständig entfernt sind;
B. Der vom Schritt A kommende Strom, der im wesentlichen frei von den leichter zu entfernenden Verunreinigungen ist, jedoch noch schwerer zu entfernenden Stickstoff und Methan enthält, wird bei einer höheren Temperatur mit einer oder mehreren Schichten eines nicht verdampfbaren Gettermaterials in Kontakt gebracht, welches ausgewählt wird aus;
i) Zirkonium-, Vanadium- und Eisenlegierungen;
ii) Zirkonium-, Mangan- und Eisenlegierungen, worin bis zu 0,8 Zirkoniumatome durch Titan ersetzt sein können.

2. Verfahren nach Anspruch 1,
worin der Druck des besagten Stroms 1 bis 20 bar beträgt und worin die Temperatur im Schritt B 200 bis 600 °C beträgt.

3. Verfahren nach Anspruch 2, worin der
Wasserstoffbeschickungsstrom im wesentlichen frei von Methan ist und worin die Temperatur im Schritt B 300 bis 350 °C beträgt.

4. Verfahren nach Anspruch 2,
worin der Wasserstoffbeschickungsstrom auch Methan als Verunreinigung enthält und worin die Temperatur im Schritt B 400 bis 600 °C beträgt,

5. Verfahren nach Anspruch 1,
worin die Nickel- und/oder Nickelverbindungen auf einem Träger gestützt sind, der im wesentlichen aus einem Silikalit, einem Titansilikalit, einem Xerogel oder einem Silika besteht und der eine effektive Oberfläche besitzt, die 100 m²/g oder mehr beträgt (bevorzugt 100 bis 200 m²/g).

6. Verfahren nach Anspruch 1,
worin der Nickel enthaltenden Schicht eine zweite Sorptionsschicht folgt oder (bevorzugt) vorausgeht, die aus einem oder mehreren natürlichen oder synthetischen Molekularsieben und insbesondere aus natürlichen oder synthetischen Zeolithen, Silikaliten oder Titansilikaliten besteht.

7. Verfahren nach Anspruch 1,
worin das Gettermaterial in einem Gehäuse mit gleichmäßig und glatt polierten inneren Wänden enthalten ist und die Rauheit dieser inneren Wände ausgedrückt in Mittellinien Durchschnittshöhe (R_{ε}) 0,5 µm oder weniger und bevorzugt 0,25 µm beträgt.

8. Verfahren nach Anspruch 4,
worin die Wasserstoffanströmungsgeschwindigkeit 0,5 bis 50 Normal cm³/min pro Gramm Gettermaterial beträgt und worin die Menge des schwer zu entfernenden Methans bis zu 5 ppm beträgt.

9. Verfahren nach Anspruch 1,
worin das Gettermaterial in der Form eines losen Pulvers mit einer Partikelgröße von 1 bis 500 µm und bevorzugt von 1 bis 250 µm vorliegt.

10. Verfahren nach Anspruch 1, .
worin das besagte Gettermaterial in Form eines geformten Körpers, insbesondere Kügelchen mit einer Durchschnittsgröße von bevorzugt 0,5 bis 5 mm vorliegt.

11. Verfahren nach Anspruch 1,
worin das Gettermaterial eine nicht verdampfbare, ternäre Getterlegierung ist, deren Zusammensetzung in Gew.-% aufgetragen auf ein Dreistoff-Diagramm innerhalb eines Polygons liegt, dessen Ecken durch die folgenden Punkte festgelegt sind:
(a) 75 % Zr - 20 % V - 5 % Fe
(b) 45 % Zr - 20 % V - 35 % Fe
(c) 45 % Zr - 50 % V - 5 % Fe

12. Verfahren nach Anspruch 11,
worin das Gettermaterial eine nicht verdampfbare ternäre Getterlegierung ist, deren Zusammensetzung in Gew.-% bei Auftragung auf ein Dreistoff-Diagramm innerhalb eines Polygons liegt, dessen Ecken durch die folgenden Punkte festgelegt sind:
(d) 70 % Zr - 25 % V - 5 % Fe
(e) 70 % Zr - 24 % V - 6 % Fe
(f) 66 % Zr - 24 % V - 10 % Fe
(g) 47 % Zr - 43 % V - 10 % Fe
(h) 47 % Zr - 45 % V - 8 % Fe
(i) 50 % Zr - 45 % V - 5 % Fe

13. Verfahren nach Anspruch 1,
worin die Zr-V-Fe-Legierung wie folgt modifiziert werden kann:
i) Eisen oder Vanadium können teilweise durch Nickel, Kobalt oder Mangan ersetzt werden;
ii) Vanadium kann teilweise durch Niob ersetzt werden;
iii) ein Teil des Zirkoniums kann durch Titan ersetzt werden.

14. Eine Vorrichtung zur Entfernung gasförmiger Verunreinigungen aus einem Wasserstoffstrom, der eine erste Klasse von leichter zu entfernenden Verunreinigungen wie COₓ sowie eine zweite Klasse von schwerer zu entfernenden, hauptsächlich aus Stickstoff und Methan bestehenden Verunreinigungen enthält, welche enthält:
A) einen Gaseinlaß (102) in Fließverbindung durch Rohre (104, 104') mit den vorläufigen Reinigungskammern (106, 106'), sowie Ventile (108, 108'), die wahlweise geöffnet oder geschlossen werden können und den Durchfluß des Verunreinigungen enthaltenden Wasserstoffs durch die erste und zweite vorläufige Reinigungskammer (106, 106') ermöglichen, welche eine Schicht aus einem bestimmten, auf unterstütztem Nickel basierenden Material (110) enthält und ggf. auch eine zweite Schicht aus einem natürlichen oder synthetischen Molekularsiebmaterial (111) enthält;
b) eine Endreinigungskammer (112), die durch die Rohre (114, 114') und die Ventile (116, 116'), welche den Fluß des teilweise gereinigten Wasserstoffs aus einer der beiden vorläufigen Reinigungskammern (106, 106') steuert, und somit eine Regenerierung von Nickel in einer Kammer erlaubt, während die andere arbeitet, in Fließkontakt mit den vorläufigen Reinigungskammern (106, 106') steht und worin diese Endreinigungskammer (112) eine Schicht aus nicht verdampfbarem Gettermaterial (118) enthält, das ausgewählt ist aus:
A) Zirkonium-, Vanadium- und Eisenlegierungen;
B) Zirkonium-, Mangan- und Eisenlegierungen, worin bis zu 0,8 Zirkoniumatome durch Titan ersetzt werden können.

## Revendications

1. Un procédé d'élimination d'impuretés gazeuses d'un courant d'hydrogène, contenant une première classe d'impuretés faciles à éliminer, telle que par exemple Coₓ, et une seconde classe d'impuretés plus difficiles à éliminer, se composant principalement d'azote et de méthane, comprenant essentiellement les opérations suivantes :
A. Ledit courant est tout d'abord amené en contact, à 5-50°C, avec un ou plusieurs lits d'une matière particulaire contenant du nickel et/ou des composés de nickel, et facultativement aussi un support, dans lequel au moins 1% en poids (de préférence 5%) de la quantité totale de nickel est présente sous forme réduite (élémentaire), jusqu'à ce que lesdites impuretés plus faciles a éliminer soient éliminées d'une manière essentiellement complète ;
B. le courant provenant de l'opération A, essentiellement exempt desdites impuretés plus faciles à éliminer, mais contenant encore lesdits azote et méthane plus difficiles à éliminer, est amené en contact à une température plus élevée avec un ou plusieurs lits d'une matière d'absorption non évaporable choisie parmi :
i) les alliages de zirconium, vanadium et fer ;
ii) les alliages de zirconium, manganèse et fer, dans lesquels jusqu'à 0,8 atome de zirconium peut être remplacé par du titane.

2. Le procédé de la revendication 1, dans lequel la pression dudit courant est de 1 à 20 bars et dans lequel la température de l'opération B est de 200 à 600°C.

3. Le procédé de la revendication 2, dans lequel le courant d'alimentation d'hydrogène est essentiellement exempt de méthane, et dans lequel la température de l'opération (B) est de 300 à 350°C.

4. Le procédé de la revendication 2, dans lequel le courant d'alimentation d'hydrogène contient également du méthane, en tant qu'impureté, et dans lequel la température de l'opération (B) est de 400 à 600°C.

5. Le procédé de la revendication 1, dans lequel lesdits nickel et/ou composés de nickel sont portés par un support se composant essentiellement d'une silicalite, d'une silicalite de titane, d'un xérogel ou d'une silice présentant une surface efficace égale ou supérieure à 100 m²/g (de préférence 100 à 200 m²/g).

6. Le procédé de la revendication 1, dans lequel le lit contenant du nickel est suivi ou (de préférence) précédé par un second lit de sorption, se composant d'un ou de plusieurs tamis moléculaires naturels ou synthétiques et en particulier des zéolites, des silicalites ou des silicalites de titane de type naturel ou synthétique.

7. Le procédé de la revendication 1, dans lequel ladite matière d'absorption est contenue dans un boîtier présentant des parois internes uniformément et uniment polies, la rugosité desdites parois internes, exprimée en termes de rugosité moyenne arithmétique (Rₐ), étant égale ou inférieure à 0,50 et de préférence 0,25 micromètre.

8. Le procédé de la revendication 4, dans lequel la vitesse spatiale de l'hydrogène est de 0,5 à 50 cm³ normale/minute par gramme de matière absorbante, et dans lequel la quantité du méthane difficilement éliminable est jusqu'à 5 ppm.

9. Le procédé de la revendication 1, dans lequel ladite matière absorbante se présente sous la forme d'une poudre lâche ayant une granulométrie moyenne de 1 à 500 et de préférence de 1 à 250 micromètres.

10. Le procédé de la revendication 1, dans lequel ladite matière absorbante se présente sous la forme d'un corps conformé, en particulier sous la forme de pastilles, ayant de préférence une granulométrie de 0,5 à 5 mm.

11. Le procédé de la revendication 1, dans lequel la matière absorbante est un alliage absorbant ternaire non évaporable, dont la composition, en pourcentage en poids, lorsqu'elle est portée sur un diagragme ternaire, se trouve à l'intérieur d'un polygone présentant pour ses coins les points définis par :
(a) 75% Zr - 20% V - 5% Fe
(b) 45% Zr - 20% V - 35% Fe
(c) 45% Zr - 50% V - 5% Fe

12. Le procédé de la revendication 11, dans lequel la matière absorbante est un alliage absorbant ternaire non évapo-rable, dont la composition, en pourcentage en poids, lorsqu'elle est portée sur un diagragme ternaire, se trouve à l'intérieur d'un polygone présentant pour ses coins les points définis par :
(d) 70% Zr - 25% V - 5% Fe
(e) 70% Zr - 24% V - 6% Fe
(f) 66% Zr - 24% V - 10% Fe
(g) 47% Zr - 43% V - 10% Fe
(h) 47% Zr - 45% V - 8% Fe
(i) 50% Zr - 45% V - 5% Fe

13. Le procédé de la revendication 1, dans lequel lesdits alliages Zr-V-Fe peuvent être modifiés comme suit :
i) le fer ou le vanadium peut être partiellement remplacé par du nickel, du cobalt ou du manganèse ;
ii) le vanadium peut être partiellement remplacé par du niobium ;
iii) une partie du zirconium peut être remplacée par du titane.

14. Un appareil d'élimination d'impuretés gazeuses d'un courant d'hydrogène, contenant une première classe d'impuretés plus facilement éliminables, telle que par exemple Coₓ, et une seconde classe d'impuretés plus difficilement éliminables, se composant principalement d'azote et de méthane, comprenant :
A) une entrée de gaz 102 en communication de fluide, par l'intermédiaire de canalisations 104, 104', avec des chambres de purification préliminaires 106, 106', ainsi que des vannes 108, 108', lesquelles peuvent alternativement être ouvertes ou fermées, pour permettre un passage de l'hydrogène contenant des impuretés à travers la première ou la seconde des chambres de purification préliminaires 106, 106', contenant un lit de matières particulaires 110, basé sur du nickel supporté, et contenant facultativement également un second lit de matière de tamis moléculaire de type naturel ou svnthétique 111 ;
B) une chambre de purification finale 112, avec laquelle les chambres préliminaires 106, 106' sont en communication de fluide, par l'intermédiaire de canalisations 114, 114', et de vannes 116, 116', lesquelles commandent l'écoulement de l'hydrogène partiellement purifié provenant de l'une des chambres de purification préliminaire 106, 106', ce qui permet la régénération du nickel dans une chambre donnée tandis que l'autre est active, où ladite chambre de purification finale 112 contient un lit de matière absorbante non évaporable 118 choisi à partir :
A) des alliages de zirconium, vanadium et fer ;
B) des alliages de zirconium, manganèse et fer, dans lesquels jusqu'à 0,8 atome de zirconium peut être remplacé par du titane.
